# EUROPÄISCHE PATENTSCHRIFT

(11) **EP 2 342 150 B1**
(45) Veröffentlichungstag und Bekanntmachung des Hinweises auf die Patenterteilung: **07.11.2012**
(21) Anmeldenummer: 09778472.2
(22) Anmeldetag: 11.09.2009
(51) Int. Cl.: B65G 45/22, B08B 3/02

(54) **ENDLOSFÖRDERER MIT EINER EINRICHTUNG ZUR REINIGUNG DES FÖRDERERS**
ENDLESS CONVEYOR WITH A DEVICE FOR CLEANING THE CONVEYOR
CONVOYEUR SANS FIN AVEC DISPOSITIF POUR NETTOYER LE CONVOYEUR

(30) Priorität: 28.10.2008 DE 102008053512
(43) Veröffentlichungstag der Anmeldung: 13.07.2011
(73) Patentinhaber: KHS GmbH, 44143 Dortmund (DE)
(72) Erfinder: WOLF, Uwe, 55543 Bad Kreuznach (DE)
(86) Internationale Anmeldenummer: PCT/EP2009/006593
(87) Internationale Veröffentlichungsnummer: WO 2010/049034

(56) Entgegenhaltungen:
- DD-A- 39 584
- DE-A1- 2 515 012
- US-A1- 2005 199 471

## Beschreibung

Die Erfindung bezieht sich auf ein Transportband für Packmittel gemäß Oberbegriff Patentanspruch 1 sowie auf einen Transporteur gemäß Oberbegriff Patentanspruch 13.

Transportbänder zum Transportieren von Packmitteln sind in verschiedenen Ausführungen bekannt und finden insbesondere in Betrieben der Getränkewirtschaft oder Getränkeindustrie Verwendung, beispielsweise als Bestandteil von maschineninternen Transporteuren zum Transportieren von Packmitteln durch Behandlungsmaschinen oder aber als Bestandteil von maschinenexternen Transporteuren zum Transportieren von Packmitteln zwischen Behandlungsmaschinen, z.B. zwischen Reinigungs-, Füll- und/oder Verschließmaschinen usw. Generell bestehen Transportbänder hierfür aus wenigstens einem Transportbandrahmen und aus wenigstens einem an diesem Rahmen vorgesehenen, eine geschlossene Schlaufe bildenden und endlos umlaufend antreibbaren Transportelement, welches beispielsweise eine Scharnierbandkette ist und mit einer Oberseite einer oberen Schlaufenlänge der Schlaufe eine in einer Transportebene angeordnete Transportfläche bildet, auf der die Packmittel aufstehend mit dem umlaufend angetriebenen Transportelement in einer Transportrichtung bewegt werden.

Speziell bei Verwendung von Transportbändern für Transporteure in Anlage zur Behandlung von Packmitteln, beispielsweise in Abfüllanlagen, in denen die z.B. von Behältern gebildeten Packmittel von einer Reinigungsmaschine über eine Inspektionsmaschine einer Füll- und Verschließmaschine zugeführt werden, ist ein hoher Grad an Sauberkeit und Keimfreiheit insbesondere auch für den jeweiligen Transporteur und dessen Transportband zu fordern, um zu vermeiden, dass Schmutz und Keime in hygienisch sensible Bereiche gelangen.

Bekannt ist speziell ein Transporteur im wesentlichen bestehend aus einem Transportband mit einem eine geschlossene Schlaufe bildenden und endlos umlaufend antreibbaren Transportelement in Form einer Scharnierbandkette(DE-94 10 612.6 U1), der ein Transportband gemäβ dem Oberbegriff des Anspruchs 1 offenbart. An beiden Längsseiten des Transportbandes bzw. der von diesem gebildeten Transportstrecke sind zwei jeweils einen Verteilerkanal bildende Rohre vorgesehen, die eine Vielzahl von Düsenöffnungen aufweisen, mit denen ein Sterilisationsmittel auf die die Transportfläche bildende Oberseite der oberen Schlaufenlänge der von der Scharnierbandkette gebildeten Schlaufe und dabei auch auf die Standfläche der Gefäße ausgebracht wird. Dieser bekannte Transporteur bzw. dessen Transportband sind konstruktiv aufwendig. Nachteilig ist auch, dass insbesondere die Gelenke oder Scharniere zwischen den einzelnen Kettengliedern der Scharnierbandkette, an denen sich Keime und Schmutz in verstärktem Maße ansammeln können, nicht oder nur ungenügend behandelt werden. Die DD 39 584 A1 offenbart eine Einrichtung zum Reinigen von Förderbändern, bei welchem ein Rohrsystem mit Sprührohren vorgesehen ist, wobei die Sprührohre zwischen Ober- und Untertrum quer zur Laufrichtung hineinragen. Die Sprührohre weisen eine Anzahl von Spritzdüsen auf, mittels welcher Wasser auf die Bandunterseite versprüht wird. Eine vergleichbare Vorrichtung zeigt auch die EP 1 884 488 A1, bei welcher die quer zum Transportband verlaufenden Sprührohre ebenfalls mit mindestens einer Düse versehen sind.

Nachteilig ist weiterhin auch, dass die bekannte Ausbildung des Transportbandes keine Möglichkeit bietet, ohne aufwendige konstruktive Änderungen mehrere Transportbänder zur Schaffung einer breite Transportfläche seitlich, d.h. quer zur Transportrichtung aneinander anschließend anzuordnen.

Das Dokument US 2005/0199471 A1 offenbart ein Transportband mit einem rohrartigen Element. Dieses Element ist nicht in der Längsrichtung des Transportbands angeordnet und hat deshalb einen beschränkten Wirkungsbereich.

Aufgabe der Erfindung ist es, ein Transportband aufzuzeigen, welches die vorgenannten Nachteile vermeidet und insbesondere bei vereinfachter konstruktiver Ausbildung eine besonders intensive Behandlung des jeweiligen Transportelementes auch an kritischen Bereichen ermöglicht. Zur Lösung dieser Aufgabe ist ein Transportband entsprechend dem Patentanspruch 1 ausgebildet. Ein Transporteur ist Gegenstand des Patentanspruches 12.

Das erfindungsgemäße Transportband ermöglicht eine Behandlung des Transportelementes, welches beispielsweise ebenfalls wenigstens eine Scharnierbandkette ist, intensiv auch an schwer zugänglichen Bereichen an der Innenseite der von dem umlaufenden Transportelement gebildeten Schlaufe, d.h. beispielsweise u.a. auch ein Unterspritzen von Verbindungsgliedern oder Scharnieren einer das wenigstens eine Transportelement bildenden Scharnierbandkette. Ein besonderer Vorteil besteht weiterhin darin, dass das tragende Element des Transportbandrahmens oder des Rahmenabschnittes rohrartig ausgeführt ist und den wenigstens einen Verteilerkanal zum Zuführen des Behandlungsmediums an die Düsen bildet, also dieses rohrartige Rahmenelement Mehrfachfunktion hat. Durch die Anordnung des rohrartigen Rahmenelementes zwischen der oberen, sich in Transportrichtung bewegenden Schlaufenlänge und der unteren, sich entgegen der Transportrichtung bewegenden Schlaufenlänge des Transportelementes ergibt sich eine sehr kompakte Ausbildung des Transportbandes, die (Ausbildung) insbesondere auch ein Aneinanderreihen von mehreren Transportbändern senkrecht zu ihrer Transportrichtung ohne konstruktive Änderungen ermöglicht, sowie eine gute Erreichbarkeit sowohl der oberen, als auch der unteren Schlaufenlänge für das über die Düsen ausgebrachte Behandlungsmedium.

Bei einer bevorzugten Ausführungsform sind die Düsen so angeordnet, dass deren Düsenstrahlen unter einem Winkel kleiner als 90° auf die zu behandelnden Bereiche oder Flächen auftreffen, wodurch sich eine besonders intensive Behandlung, insbesondere auch Reinigung und/oder Sterilisation nicht nur des Transportelementes, sondern auch anderer mit dem Transportelement zusammenwirkender Funktionselemente, beispielsweise Gleitführungen usw. ergibt.

Das Behandlungsmedium kann unterschiedlichster Konsistenz sein, beispielsweise ein flüssiges und/oder gas- und/oder dampfförmiges Medium. Weiterhin kann das Behandlungsmedium für unterschiedliche Behandlungszwecke ausgewählt sein, z.B. zu Reinigen und/oder Sterilisieren und/oder zum Schmieren des Transportbandes.

Packmittel im Sinne der Erfindung sind die üblichen Weich- und/oder Hartverpackungen, wie sie insbesondere in der Getränkeindustrie Verwendung finden, beispielsweise Verpackungen, die aus Flachmaterial durch Zuschneiden, Falten und Verbinden hergestellt sind, insbesondere aber auch Behälter, wie Flaschen, Dosen usw.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:

Fig. 1 in perspektivischer Seitenansicht eine Teillänge eines Transportbandes eines Transporteurs für Packmittel, beispielsweise für Flaschen oder Behälter;

Fig. 2 in vereinfachter Darstellung einen Schnitt durch das Transportband der Figur 1.

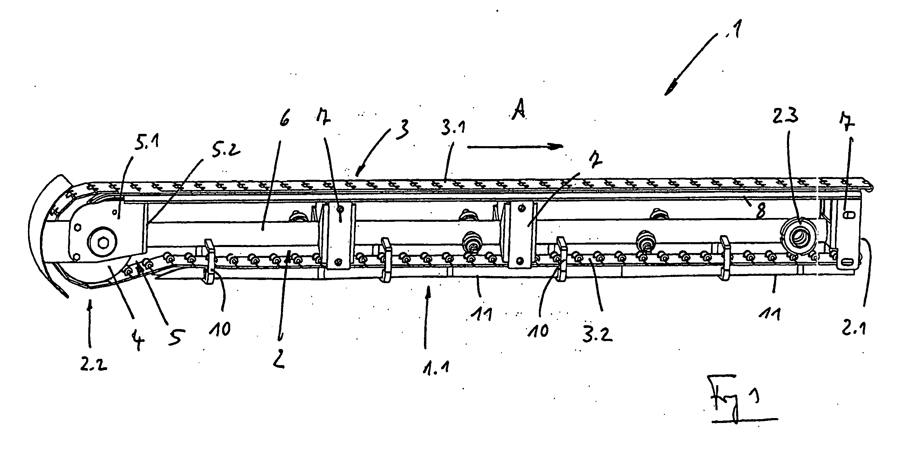

Das in den Figuren allgemein mit 1 bezeichnete Transportband ist beispielsweise Bestandteil eines Transporteurs zum Transportieren von Packmitteln, z.B. zum Transportieren von Behältern oder Flaschen. Das Transportband 1 besteht im Wesentlichen aus einem sich über die gesamte Länge dieses Transportbandes erstreckenden Rahmen 1.1, der bei der dargestellten Ausführungsform von mehreren aneinander anschließenden und mit einender verbundenen Rahmenabschnitten 2 gebildet ist. In der Figur 1 sind der einfacheren Darstellung wegen nur eine Teillänge des Transportbandes 1 und damit auch nur eine Teillänge des Rahmens mit dem dortigen Rahmenabschnitt 2 wiedergegeben, an dessen in der Figur 1 rechtes Ende 2.1 wenigstens ein weiterer Rahmenabschnitt anschließt. Im Verwendungsfall sind die Rahmenabschnitte 2 beispielsweise über nicht dargestellte Fuß- oder Rahmenelemente abgestützt gehalten, und zwar derart, dass sie mit ihrer Längserstreckung jeweils horizontal oder im Wesentlichen horizontal angeordnet sind.

An dem von den Rahmenabschnitten 2 gebildeten Rahmen ist ein Transportelement 3 in Form einer Scharnierbandkette vorgesehen, die eine in sich geschlossene und endlos umlaufend antreibbare Schlaufe mit einer oberen Schlaufenlänge 3.1 und einer unteren Schlaufenlänge 3.2 bildet und die zumindest an den beiden Enden des Transportbandes 1 2 über jeweils ein am Rahmen gelagertes Umlenkrad geführt ist, wie dies in der Figur 1 für das dortige Umlenkrad 4 am Ende 2.2 des Rahmenabschnitts 2 gezeigt ist. Eines der beiden Umlenkräder, beispielsweise das Umlenkrad an dem in der Figur 1 nicht dargestellten Ende des Transportbandes 1 ist durch einen Antrieb angetrieben, und zwar derart, dass sich das Transportband 3 mit der oberen Schlaufenlänge 3.1, die mit ihrer bezogen auf die Schlaufe außen liegende Oberseite eine in einer Transportebene ET angeordnete Transport- und/oder Standfläche für die Packmittel bildet, in der mit dem Pfeil A angegebenen Förderrichtung des Transportbandes 1 bewegt. Das Umlenkrad 4 ist um die Achse senkrecht zur Längserstreckung des Rahmenabschnitts 2 sowie parallel zur Transportebene ET orientierten Achse frei drehbar an dem Ende 2.2 gelagert, und zwar zwischen den Schenkeln 5.1 eines U-förmigen oder gabelartigen Lagerträgers 5.

Der Rahmenabschnitt 2 besteht bei der dargestellten Ausführungsform im Wesentlichen aus einem zentralen Rohr 6, welches das eigentliche, d.h. das tatsächliche und im Wesentlichen einzige tragende Element des Rahmenabschnittes 2 bildet und welches zwischen der obere Schlaufenlänge 3.1 und der unteren Schlaufenlänge 3.2 des Transportelementes 3 angeordnet ist. An dem in der Figur 1 dargestellten Ende des Rohres 6 ist stirnseitig der Lagerträger 5 mit einem die beiden Schenkel 5.1 verbindenden Jochabschnitt 5.2 befestigt. Weiterhin sind am Rohr 6 in vorgegebenen Abständen Stützelemente 7 vorgesehen, und zwar in der Form, dass sich jeweils zwei Stützelemente paarweise in einer Achsrichtung parallel zur Achse des Umlenkrades 4 und damit in einer Achsrichtung senkrecht zur Transportrichtung A und parallel zur Transportebene ET gegenüberliegen und die Stützelemente mit ihrer Längserstreckung jeweils senkrecht zur Transportrichtung A und senkrecht zur Transportebene der Schlaufenlänge 3.1 orientiert sind. Jedes Stützelement 7 ist so mit dem zentralen Rohr 6 verbunden, so dass es zumindest über das Rohr 6 nach oben, d.h. in Richtung zur Transportebene ET vorsteht. An den oberen Enden der Stützelemente 7 sind zwei Tragschienen 8 befestigt, und zwar jeweils eine Tragschiene 8 an jeder Längsseite des Transportbandes 1.

Die beiden oberen Tragschienen 8, die sich in Transportbahnlängsrichtung erstrecken, sind an ihren einander zugewandten und voneinander beabstandeten innen liegenden Rändern jeweils mit einem Gleitschiene 9 versehen, welche eine Auflage- und Gleitfläche für die Kettenglieder des Transportelementes 3 bildet und bei der dargestellten Ausführungsform jeweils von einer den betreffenden Tragschienenrand umgreifenden Profilschiene aus Kunststoff gebildet ist.

Am zentralen Rohr 6 sind weiterhin in vorgegebenen Abständen mehrere Trägerbügel 10 befestigt, an denen unterhalb des Rohres 6 ein rinnenartiges, an der Oberseite offenes und sich ebenfalls über die gesamte Länge des Transportbandes 1 erstreckendes Rahmenelement 10 gehalten ist, in dem u.a. Gleitführungen oder Anlagen für die untere Länge 3.2 des Transportelementes 3 gebildet sind, beispielsweise in Form von zwei parallelen und sich in Transportbandlängsrichtung erstreckenden Profilleisten aus Kunststoff.

Das Rohr 6 bildet einen beidendig geschlossenen Kanal 13 mit mehren in Längsrichtung des Rohres 6 gegeneinander versetzten und an diesem Rohr vorgesehenen Düsen 14 bzw. 15. Diese sind jeweils an einem radial vom Rohr 6 wegstehenden und mit dem Kanal 13 in Verbindung stehenden Rohrstutzen 16 gebildet, an dem mittels einer Überwurfmutter 17 ein Düsenkopf 18 mit wenigstens einer Düsenöffnung 19 vorgesehen ist, und zwar derart, dass jeder Düsenkopf 18 austauschbar und durch Drehen oder Schwenken um die Achse des zugehörigen Anschlussstutzen 16 einstellbar ist. Die Düsenköpfe 18 sind beispielsweise Formteile aus Kunststoff, können aber auch aus einem metallischen Werkstoff gefertigt sein.

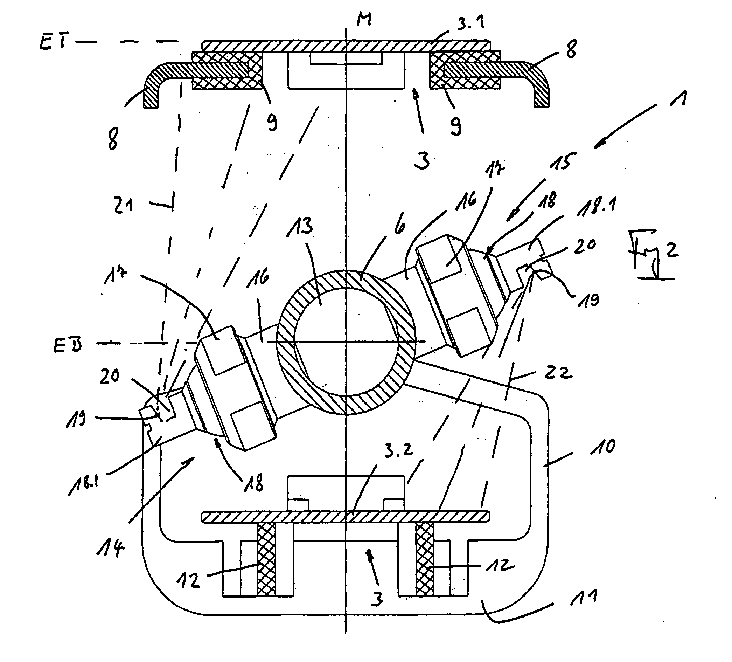

Wie insbesondere die Figur 2 zeigt, ist jeder Düsenkopf 18 an seinem über die zugehörige Überwurfmutter 17 vorstehenden, beispielsweise im Wesentlichen kreiszylinderförmigen Abschnitt 18.1 mit einer Ausnehmung 20 versehen. Im Bereich jeder Ausnehmung 20 ist jeweils wenigstens eine mit dem Anschlussstutzen 16 und damit mit dem Kanal 13 in Verbindung stehenden Düsenöffnung 19 vorgesehen, und zwar an der dem freien Ende des jeweiligen Düsenkopfes 18 benachbarten schrägen Seite der Ausnehmung 20 derart. Die Achse der jeweiligen Düsenöffnung 19 schließt mit der Achse des zugehörigen rohrförmigen Anschlussstutzens 16 einen Winkel kleiner als 90° ein, und zwar in einer Ebene senkrecht zur Achse des Rohres 6 oder in einer gegenüber dieser Achse geneigten Ebene. Die Anordnung ist weiterhin so getroffen, dass die Düsen 14 mit ihren Düsenöffnungen 19 bzw. mit den aus diesen austretenden divergierenden Düsenstrahlen 21 auf die Unterseite der oberen Schlaufenlänge 3.1 sowie auf die dortigen Gleitführungen für das Transportelement 3 gerichtet sind und die Düsen 15 mit ihren Düsenöffnungen 19 bzw. mit den aus diesen Düsenöffnungen austretenden divergierenden Düsenstrahlen 22 auf die untere Schlaufenlänge 3.2 des Transportelemente 3 gerichtet sind, und zwar jeweils auf die Innenseite der von dem Transportelement 3 gebildeten Schlaufe, an der (Innenseite) u.a. die die einzelnen Kettenglieder des Transportelementes 3 miteinander verbindenden Scharniere oder Gelenke 23 vorgesehen sind.

Wie die Figur 2 zeigt, sind die einzelnen Düsen 14 und 15 bzw. deren Anschlussstutzen 16 so vorgesehen, dass die radial zur Achse des Rohres 6 orientierten Achsen der Anschlussstutzen 16 gegenüber einer Bezugsebene EB geneigt sind, die die Achse des Rohres 6 einschließt und parallel zur Transportebene ET liegt. Die Düsen 14 bzw. deren Düsenköpfe 18 befinden sich dabei unterhalb der Bezugsebene EB und die Düsen 15 bzw. deren Düsenköpfe 18 oberhalb dieser Bezugsebene, so dass jeweils ein möglichst großer Abstand zwischen dem Düsenkopf 18 und den mit den Spritzstrahlen 21 bzw. 22 zu behandelnden Bereichen besteht, die Spritzstrahlen 21 und 22 also für eine möglichst großflächige Behandlung ausreichend stark divergieren können. Mit M ist in der Figur 2 eine Mittelebene bezeichnet, die die Achse des Rohres 6 einschließt und senkrecht zur Transportebene ET orientiert ist. Die Düsen 14 sind bevorzugt jeweils abwechselnd an der einen und an der anderen Seite dieser Mittelebene M vorgesehen. Gleiches gilt auch für die Düsen 15.

Zum Zuführen des jeweiligen Behandlungsmediums in den Kanal 13 und damit an die Düsen 14 und 15 ist am Rohr 6 ein Anschlussstutzen 23 vorgesehen, und zwar bei der dargestellten Ausführungsform an dem Ende 2.1 des Rahmenabschnittes 2.

Wie insbesondere die Figur 2 zeigt, sind die Düsen 14 und 15 weiterhin so ausgebildet und angeordnet, dass sie im Wesentlichen nicht über die von den außen liegenden Flächen der unteren Tragbügel 10 definierten maximale Breite des Transportbandes 1 vorstehen, also u.a. die Möglichkeit besteht, mehrere Transportbänder 1 quer zur Transportrichtung A aneinander anschließend vorzusehen bzw. mit einander zu verbinden, um so einen Transporteur mit einer Transportfläche zu bilden, deren Breite quer zur Transportrichtung A wenigstens der zweifachen oder aber der mehrfachen Breite des als Scharnierbandkette ausgebildeten Transportelementes 3 entspricht.

Die Funktionselemente des Transportbandes 1 sowie insbesondere auch des Rahmenabschnittes 2 sind aus einem metallischen Werkstoff bzw. Stahl gefertigt, soweit nicht vorstehend ausdrücklich ein anderer Werkstoff angegeben wurde. Die an einander anschließenden Rahmenabschnitte 2 sind zu dem jeweiligen Transporteur mechanisch beispielsweise durch Verschrauben verbunden und mit ihren Anschlussstutzen 23 jeweils an äußere Leitungen zum Zuführen des Behandlungsmediums oder der Behandlungsmedien angeschlossen.

Das mit den Düsen 14 und 15 auf das Transportelement 3 auszubringende Behandlungsmedium kann unterschiedlichster Art sein, beispielsweise ein flüssiges, kaltes, insbesondere aber auch heißes Reinigungs- und/oder Sterilisationsmedium, beispielsweise in Form von kaltem oder heißem Wasser eventuell mit Reinigungs- und/oder Sterilisationszusätzen, um das Transportelement 3 insbesondere auch an den besonders stark verschmutzenden, die Scharniere oder Gelenke 23 aufweisenden Schlaufeninnenseite zu reinigen sowie Mikroorganismen und Bakterien, insbesondere auch thermisch empfindliche Mikroorganismen, z.B. Hefen, Schimmelpilze, pathogene Mikroorganismen, Bakterien usw. abzutöten.

Die aus den Düsen 14 und 15 ausgebrachte Behandlungsflüssigkeit kann auch zum Schmieren des Transportbandes 1 und des Transportelementes 3 dienen, wobei die Möglichkeit besteht, über die Düsen 14 und 15 zeitlich versetzt unterschiedliche Behandlungsmedien und/oder aber Behandlungsmedien auszubringen, die mehrere Komponenten für unterschiedliche Behandlungszwecke in Kombination aufweisen, beispielsweise Behandlungsmedien, die zum Reinigen und Sterilisieren sowie zugleich zum Schmieren des Transportbandes 1 geeignet sind.

Das jeweils über die Düsen 14 und 15 ausgebrachte Behandlungsmedium wird zumindest weitestehend in dem an der Oberseite offenen rinnenartigen Rahmenelement 15 aufgefangen und kann dadurch gezielt abgeleitet und entsorgt werden.

Vorstehend wurde davon ausgegangen, dass das jeweilige Behandlungsmedium ein flüssiges Medium ist. Es besteht auch die Möglichkeit, insbesondere bei entsprechender Ausbildung der Düsen 14 und 15 über diese Düsen dampf- und/oder gasförmige Medien auszubringen, beispielsweise Wasserdampf, um eine besonders intensive Reinigung und/oder Sterilisation des Transportelementes 3 zu erreichen. Weiterhin besteht die Möglichkeit, das zentrale Rohr 6 oder ein entsprechendes zentrales Rohrelement mit wenigstens zwei Kanälen 13 auszubilden, die jeweils mit eigenen Düsen entsprechend den Düsen 14 und 15 versehen sind, so dass über die getrennten Kanäle unterschiedliche Behandlungsmedien gesondert ausgebracht werden können.

Ein wesentlicher Vorteil des Transportbandes 1 besteht darin, dass das zentrale Rohr 6 sowohl tragendes Element des Rahmenabschnittes 2 ist und als Rohr bei reduziertem Gewicht eine hohe Stabilität gewährleistet, und dass über das Rohr 6 zugleich auch das jeweilige Behandlungsmedium den Düsen 14 und 15 zugeführt wird, also keine zusätzlichen Anschlüsse oder Rohre entlang des Transportbandes oder entlang der von diesem Transportband gebildeten Transportstrecke erforderlich sind. Ein wesentlicher Vorteil des Transportbandes 1 besteht auch darin, dass das Transportband 1 bzw. der Rahmenabschnitt 2 modulartig mit weiteren Transportbändern 1 oder Rahmenabschnitten 2 zu Transporteuren unterschiedlichster Art und/oder Größe zusammengestellt werden kann, ohne dass konstruktive Änderungen am Transportband oder am Rahmenabschnitt 2 erforderlich sind. Durch die beschriebene Anordnung der Düsen 14 und 15 bzw. deren Düsenkörper 18 und Düsenöffnungen 19 sind die Spritzstrahlen 21 und 22 jeweils schräg auf die zu behandelnde Bereiche gerichtet, wodurch eine besonders intensive Behandlung (z.B. Reinigung und/oder Sterilisation) erreicht wird.

### Bezugszeichenliste

- 1: Transportband
- 1.1: Transportbandrahmen
- 2: Rahmenabschnitt
- 2.1, 2.2: Ende des Rahmenabschnittes
- 3: Transportelement bzw. Scharnierbandkette
- 3.1: obere Schlaufenlänge
- 3.2: untere Schlaufenlänge
- 4: Umlenkrad am Ende 2.2
- 5: Lagerträger
- 5.1: Schenkel
- 5.2: Jochabschnitt
- 6: zentrales Rohr
- 7: Stützelement
- 8: Tragschiene
- 9: Gleitschiene
- 10: unterer Trägerbügel
- 11: wannen- oder rinnenartiges Rahmenelement
- 12: Führung
- 13: Kanal
- 14, 15: Düse
- 16: Anschlussstutzen
- 17: Überwurfmutter
- 18: Düsenkopf
- 18.1: Abschnitt des Düsenkopfes 18
- 19: Düsenöffnung
- 20: Ausnehmung am Düsenkopf 18
- 21, 22: Spritz- oder Düsenstrahl
- 23: Gelenk oder Scharnier
- 24: Anschlussstutzen
- A: Transportrichtung
- EB: Bezugsebene
- ET: Transportebene
- M: Mittelebene

## Patentansprüche

1. Transportband zum Transportieren von Packmitteln, mit wenigstens einem eine geschlossene Schlaufe bildenden und endlos umlaufend antreibbaren Transportelement (3) an einem Transportbandrahmen (1.1) sowie mit wenigstens einem sich in einer Transportbandlängsrichtung erstreckenden rohrartigen Element, welches wenigstens einen Verteilerkanal (13) mit mehreren Düsen (14, 15) mit Düsenöffnungen (19) zum Ausbringen wenigstens eines Behandlungsmediums auf das Transportelement (3) und/oder auf mit diesem zusammenwirkende Elemente des Transportbandrahmens (1.1) aufweist, wobei das Transportelement (3) mit einer oberen Schlaufenlänge (3.1) seiner Schlaufe eine in einer Transportebene (ET) angeordnete und in einer Transportrichtung (A) bewegbare Transportfläche für die Packmittel bildet, **dadurch gekennzeichnet, dass**
auf wenigstens einer Teillänge des Transportbandes (1) das wenigstens eine den wenigstens einen Verteilerkanal (13) aufweisende rohrartige Element das tragende Rahmenelement (6) des Transportbandrahmens (1.1) oder eines Rahmenabschnitts (2) dieses Rahmens bildet und zwischen der oberen Schlaufenlänge (3.1) und einer unteren Schlaufenlänge (3.2) der Schlaufe des Transportelementes (3) angeordnet ist.

2. Transportband nach Anspruch 1, **dadurch gekennzeichnet, dass** das rohrartige Rahmenelement (6) einen einzigen, für sämtliche Düsen (14, 15) gemeinsamen Verteilerkanal (13) oder wenigstens zwei Verteilerkanäle (13) für jeweils eine Düsengruppe bildet.

3. Transportband nach Anspruch 1 oder 2, **dadurch gekennzeichnet, dass** der Transportbandrahmen (1.1) aus wenigstens zwei in Transportbandlängsrichtung aneinander anschließenden Rahmenabschnitten (2) besteht, und dass wenigstens einer dieser Rahmenabschnitte das den wenigstens einen Verteilerkanal (13) bildende rohrartige Rahmenelement (6) aufweist.

4. Transportband nach einem der vorhergehenden Ansprüche, **dadurch gekennzeichnet, dass** die Düsen (14, 15) Düsenöffnungen (19) aufweisen, die in einem Winkel kleiner als 90° auf den jeweils zu behandelnden Bereich gerichtet sind.

5. Transportband nach einem der vorhergehenden Ansprüche, **dadurch gekennzeichnet, dass** die Düsen (14, 15) oder Düsenöffnungen (19) für den Austritt des jeweiligen Behandlungsmediums bildendende Düsenkörper (18) der Düsen (14, 15) einstellbar vorgesehen sind.

6. Transportband nach einem der vorhergehenden Ansprüche, **dadurch gekennzeichnet, dass** die Düsen (14, 15) jeweils von einem mit dem Verteilerkanal (13) in Verbindung stehenden Anschlussstutzen (16) und einen an dem Anschlussstutzen beispielsweise mittels einer Überwurfmutter (17) austauschbar befestigten und wenigstens eine Düsenöffnung (19) aufweisenden Düsenkörper (18) gebildet ist.

7. Transportband nach einem der vorhergehenden Ansprüche, **dadurch gekennzeichnet, dass** die Düsen (14, 15) für ein Ausbringen des Behandlungsmediums auf die obere und/oder untere Schlaufenlänge der von dem Transportelement (3) gebildeten Schlaufe angeordnet sind.

8. Transportband nach einem der vorhergehenden Ansprüche, **dadurch gekennzeichnet, dass** wenigstens eine Düse (14) zum Ausbringen des Behandlungsmediums auf die obere Schlaufenlänge (3.1) der von dem Transportelement (3) gebildeten Schlaufe mit ihrer wenigstens einen Düsenöffnung (19) unterhalb einer die Längsachse des zugehörigen Verteilerkanals (13) einschließenden und parallel zur Transportebene (TE) angeordneten Bezugsebene (EB) und/oder die wenigstens eine Düse (15) zum Ausbringen des Behandlungsmediums auf die untere Schlaufenlänge (3.2) der von dem Transportelement (3) gebildeten Schlaufe mit ihrer wenigstens einen Düsenöffnung (19) oberhalb dieser Bezugsebene (EB) angeordnet sind.

9. Transportband nach einem der vorhergehenden Ansprüche, **dadurch gekennzeichnet, dass** an dem rohrartigen, den wenigstens einen Verteilerkanal (13) bildenden Rahmenelement (6) wenigstens zwei sich jeweils in Transportbandlängsrichtung erstreckende Tragschienen (8) vorgesehen sind, die Gleitflächen (9) für die obere Schlaufenlänge (3.1) des Transportelementes (3) bilden.

10. Transportband nach einem der vorhergehenden Ansprüche, **dadurch gekennzeichnet, dass** an dem wenigstens einen rohrartigen Rahmenelement (6) unterhalb der unteren Schlaufenlänge (3.2) der von dem Transportelement (3) gebildeten Schlaufe wenigstens ein sich in Transportbandlängsrichtung erstreckendes rinnen- oder wannenartiges Rahmenelement (11) vorgesehen ist.

11. Transportband nach einem der vorhergehenden Ansprüche, **dadurch gekennzeichnet, dass** die Düsen (14, 15) und deren Düsenöffnungen (19) jeweils beidseitig von einer senkrecht zur Transportebene (TE) und parallel zu der Transportbandlängsachse orientierten Ebene, beispielsweise beidseitig von einer Ebene angeordnet sind, die die Mittelebene (M) der von dem Transportelement (3) gebildeten Transportfläche ist und/oder die Längserstreckung des wenigstens einen Verteilerkanals (13) einschließt.

12. Transportband nach einem der vorhergehenden Ansprüche, **dadurch gekennzeichnet, dass** das Transportelement (3) eine von einer Vielzahl von Kettengliedern gebildete Scharnierbandkette ist.

13. Transporteur zum Transportieren von Packmitteln, beispielsweise von Flaschen oder dergleichen Behältern, mit wenigstens einem eine Transportfläche für die Packmittel bildenden Transportband (1), **dadurch gekennzeichnet, dass** das Transportband (1) nach einem der vorhergehenden Ansprüche 1 - 12 ausgebildet ist.

14. Transporteur nach Anspruch 13, **dadurch gekennzeichnet, dass** die Transportfläche des Transporteurs von wenigstens zwei senkrecht zur Transportrichtung (A) aneinander anschließenden Transportbändern (1) nach einem der vorhergehenden Ansprüche 1 - 12 gebildet ist.

## Claims

1. A conveyor belt for conveying packaging, having at least one conveyor element (3) on a conveyor belt frame (1.1), whereby the conveyor element forms a closed loop and can be circulated continuously, and having at least one tube-like element which extends in a conveyor belt-longitudinal direction and which exhibits at least one distribution channel (13) with a plurality of nozzles (14, 15) having nozzle openings (19) for discharging at least one treatment medium onto the conveyor element (3) and/or onto elements of the conveyor belt frame (1.1) which interact with same, the conveyor element (3) forming with an upper loop length (3.1) of its loop a conveying surface for the packaging which (loop) is arranged in a conveying plane (ET) and can move in a conveying direction (A), wherein, over at least part of the length of the conveyor belt (1), the at least one tube-like element exhibiting the at least one distribution channel (13) forms the loadbearing frame element (6) of the conveyor belt frame (1.1) or of a frame section (2) of said frame and is arranged between the upper loop length (3.1) and a lower loop length (3.2) of the loop of the conveyor element (3).

2. A conveyor belt according to claim 1 wherein the tube-like frame element (6) forms a single distribution channel (13) common to all nozzles (14, 15) or at least two distribution channels (13), each for one nozzle group.

3. A conveyor belt according to claim 1 or 2 wherein the conveyor belt frame (1.1) comprises at least two frame sections (2) arranged contiguously in the longitudinal direction of the conveyor belt and at least one of these frame sections exhibits the tube-like frame element (6) which forms the at least one distribution channel (13).

4. A conveyor belt according to any one of the preceding claims wherein the nozzles (14, 15) exhibit nozzle openings (19) which are directed towards the region to be respectively treated at an angle of less than 90°.

5. A conveyor belt according to any one of the preceding claims wherein the nozzles (14, 15) or nozzle openings (19) are provided adjustably for the discharge of the particular treatment medium forming nozzle bodies (18) of the nozzles (14, 15) *[sic].*

6. A conveyor belt according to any one of the preceding claims wherein the nozzles (14, 15) is *[sic]* each formed by a connecting nozzle (16) connected to the distribution channel (13) and a nozzle body (18) interchangeably attached to the connecting nozzle by way for example of a cap nut (17) and exhibiting at least one nozzle opening (19).

7. A conveyor belt according to any one of the preceding claims, wherein the nozzles (14, 15) are arranged for a discharging of the treatment medium onto the upper and/or lower loop length of the loop formed by the conveyor element (3).

8. A conveyor belt according to any one of the preceding claims wherein at least one nozzle (14) are *[sic]* arranged with its at least one nozzle opening (19) beneath a reference plane (EB) enclosing the longitudinal axis of the associated distribution channel (13) and parallel to the conveying plane (TE) for the discharging of the treatment medium onto the upper loop length (3.1) of the loop formed by the conveyor element (3), and/or with the at least one nozzle (15) arranged with its at least one nozzle opening (19) above said reference plane (EB) for the discharging of the treatment medium onto the lower loop length (3.2) of the loop formed by the conveyor element (3).

9. A conveyor belt according to any one of the preceding claims wherein at least two support rails (8) each extending in the longitudinal direction of the conveyor belt and which form sliding surfaces (9) for the upper loop length (3.1) of the conveyor element (3) are provided on the tube-like frame element (6) which forms the at least one distribution channel (13).

10. A conveyor belt according to any one of the preceding claims wherein at least one channel-like or trough-like frame element (11) extending in the longitudinal direction of the conveyor belt is provided on the at least one tube-like frame element (6) beneath the lower loop length (3.2) of the loop formed by conveyor element (3).

11. A conveyor belt according to any one of the preceding claims, wherein the nozzles (14, 15) and their nozzle openings (19) are each arranged either side of a plane running at right angles to the conveying plane (TE) and parallel to the longitudinal direction of the conveyor belt, for example either side of a plane which is the median plane (M) of the conveying surface formed by the conveyor element (3) and/or which encloses the longitudinal extension of the at least one distribution channel (13).

12. A conveyor belt according to any one of the preceding claims wherein the conveyor element (3) is a flat-top chain formed by a plurality of chain links.

13. A conveyor for conveying packaging, for example bottles or similar containers, having at least one conveyor belt (1) forming a conveying surface for the packaging, wherein the conveyor belt (1) is configured according to any one of the preceding claims 1-12.

14. A conveyor according to claim 13 wherein the conveying surface of the conveyor is formed by at least two conveyor belts (1) according to any one of the preceding claims 1-12 adjoining one another at right angles to the conveying direction (A).

## Revendications

1. Bande transporteuse pour le transport de matériaux d'emballage, avec au moins un élément de transport (3) pouvant être entraîné de manière rotative sans fin et formant une boucle fermée sur un cadre de bande transporteuse (1.1) ainsi qu'avec au moins un élément tubulaire s'étendant dans un sens longitudinal de la bande transporteuse, qui présente au moins un canal de distribution (13) avec plusieurs buses (14, 15) dotées d'ouvertures de buse (19) pour l'épandage d'au moins un fluide de traitement sur l'élément de transport (3) et/ou des éléments coagissant avec celui-ci du cadre de bande transporteuse (1.1), sachant que l'élément de transport (3) forme, avec une longueur supérieure (3.1) de sa boucle, une surface de transport disposée dans un plan de transport (ET) et mobile dans un sens de transport (A) pour les matériaux d'emballage, **caractérisée en ce que**
au moins un élément tubulaire présentant au moins un canal de distribution (13) forme sur au moins une longueur partielle de la bande transporteuse (1) l'élément de cadre porteur (6) du cadre de bande transporteuse (1.1) ou d'une section (2) de ce cadre et est disposé entre la longueur supérieure (3.1) et une longueur inférieure (3.2) de la boucle de l'élément de transport (3).

2. Bande transporteuse selon la revendication 1, **caractérisée en ce que** l'élément de cadre (6) tubulaire forme un seul canal de distribution (13) commun à toutes les buses (14, 15) ou au moins deux canaux de distribution (13) respectivement pour un groupe de buses.

3. Bande transporteuse selon la revendication 1 ou 2, **caractérisée en ce que** le cadre de bande transporteuse (1.1) se compose d'au moins deux sections de cadre (2) contiguës dans le sens longitudinal de la bande transporteuse, et **en ce qu'**au moins l'une de ces sections de cadre présente l'élément de cadre (6) tubulaire formant au moins un canal de distribution (13).

4. Bande transporteuse selon l'une quelconque des revendications précédentes, **caractérisée en ce que** les buses (14, 15) présentent des ouvertures de buse (19) qui sont dirigées dans un angle inférieur à 90° vers la zone à traiter respectivement.

5. Bande transporteuse selon l'une quelconque des revendications précédentes, **caractérisée en ce que** des corps (18) formant les buses (14, 15) ou ouvertures de buse (19) pour la sortie du fluide de traitement respectif des buses (14, 15) sont prévus de manière réglable.

6. Bande transporteuse selon l'une quelconque des revendications précédentes, **caractérisée en ce que** les buses (14, 15) sont formées respectivement par un raccord (16) en liaison avec le canal de distribution (13) et un corps de buse (18) présentant au moins une ouverture de buse (19) et fixé de manière interchangeable sur le raccord par exemple à l'aide d'un écrou-raccord (17).

7. Bande transporteuse selon l'une quelconque des revendications précédentes, **caractérisée en ce que** les buses (14, 15) sont disposées sur la longueur supérieure et/ou inférieure de la boucle formée par l'élément de transport (3) pour un épandage du fluide de traitement.

8. Bande transporteuse selon l'une quelconque des revendications précédentes, **caractérisées en ce qu'**au moins une buse (14) est disposée pour l'épandage du fluide de traitement sur la longueur supérieure (3.1) de la boucle formée par l'élément de transport (3) avec son au moins une ouverture de buse (19) au-dessous d'un plan de référence (EB) incluant l'axe longitudinal du canal de distribution (13) afférent et disposé parallèlement au plan de transport (TE) et/ou l'au moins une buse (15) est disposée pour l'épandage du fluide de traitement sur la longueur inférieure (3.2) de la boucle formée par l'élément de transport (3) avec son au moins une ouverture de buse (19) au-dessus de ce plan de référence (EB).

9. Bande transporteuse selon l'une quelconque des revendications précédentes, **caractérisée en ce qu'**au moins deux rails porteurs (8) s'étendant respectivement dans le sens longitudinal de la bande transporteuse sont prévus sur l'élément de cadre (6) tubulaire formant au moins un canal de distribution (13), lesquels forment des surfaces de glissement (9) pour la longueur de boucle supérieure (3.1) de l'élément de transport (3).

10. Bande transporteuse selon l'une quelconque des revendications précédentes, **caractérisée en ce qu'**au moins un élément de cadre (11) de type rigole ou cuvette s'étendant dans le sens longitudinal de la bande transporteuse est prévu sur l'au moins un élément de cadre (6) tubulaire au-dessous de la longueur inférieure (3.2) de la boucle formée par l'élément de transport (3).

11. Bande transporteuse selon l'une quelconque des revendications précédentes, **caractérisée en ce que** les buses (14, 15) et leurs ouvertures de buse (19) sont respectivement disposées de part et d'autre d'un plan orienté perpendiculairement au plan de transport (TE) et parallèlement à l'axe longitudinal de la bande transporteuse, par exemple de part et d'autre d'un plan qui est le plan médian (M) de la surface de transport formée par l'élément de transport (3) et/ou inclut l'étendue longitudinale d'au moins un canal de distribution (13).

12. Bande transporteuse selon l'une quelconque des revendications précédentes, **caractérisée en ce que** l'élément de transport (3) est un convoyeur à charnière formé par une pluralité de maillons de chaîne.

13. Convoyeur pour le transport de matériaux d'emballage, par exemple de bouteilles ou récipients similaires, avec au moins une bande transporteuse (1) formant une surface de transport pour les matériaux d'emballage, **caractérisé en ce que** la bande transporteuse (1) est réalisée selon l'une quelconque des revendications 1 à 12.

14. Convoyeur selon la revendication 13, **caractérisé en ce que** la surface de transport du convoyeur est formée par au moins deux bandes transporteuses (1) contiguës perpendiculairement au sens de transport (A) selon l'une quelconque des revendications 1 à 12.
